Europäisches Patentamt

European Patent Office

Office européen des brevets

(19)

(11) Numéro de publication: **0 164 790**
**B1**

(12) # FASCICULE DE BREVET EUROPEEN

(45) Date de publication du fascicule du brevet:
**27.01.88**

(51) Int. Cl.⁴: **G 11 B 23/027**

(21) Numéro de dépôt: **85200792.1**

(22) Date de dépôt: **17.05.85**

(54) **Bague de cerclage et de stockage pour bobine de ruban d'enregistrement.**

(30) Priorité: **22.05.84 FR 8407951**

(43) Date de publication de la demande:
**18.12.85 Bulletin 85/51**

(45) Mention de la délivrance du brevet:
**27.01.88 Bulletin 88/4**

(84) Etats contractants désignés:
**AT BE CH DE GB IT LI NL SE**

(56) Documents cités:
**FR - A - 2 057 756**
**US - A - 3 209 904**
**US - A - 3 424 303**
**US - A - 3 696 935**
**US - A - 3 833 114**
**US - A - 3 939 977**

(73) Titulaire: **GEFITEC S.A., Avenue de la Gare, 5 Case postale 452, CH-1001 Lausanne 1 (CH)**

(72) Inventeur: **Posso, Patrick Pierre Philippe, Avenue de la Gare 5, CH-1001 Lausanne 1 (CH)**

(74) Mandataire: **Meylan, Robert Maurice et al, c/o BUGNION S.A. 10, route de Florissant Case Postale 375, CH-1211 Genève 12 - Champel (CH)**

## Description

La présente invention concerne une bague de cerclage et de stockage pour bobine de ruban d'enregistrement destinée à être utilisée avec une bobibe comprenant un moyen et une paire de flasques parallèles circulaires, cette bague comprenant une bande en matière flexible et extensible de nervures longitudinales destinées à s'engager de part et d'autre de chacun des flasques de la bobine et munie à l'une de ses extrémités d'un crochet et à son autre extrémité d'une boucle articulée sur cette extrémité et venant s'accrocher sur le crochet pour fermer la bague et la tendre sur la bobine, cette boucle étant articulée sur la bande par une biellette dont la rotation, en position d'ouverture ou de pré-accrochage, est limitée par des moyens de butée.

Une telle bague est décrite dans le brevet US 3 696 935. Cette bague est en outre largement diffusée sur le marché. Elle est constituée d'une bande en polyéthylène à l'une des extrémités de laquelle est articulée une boucle rapportée en polypropylène s'accrochant sur un crochet de matière différente fixé sur l'autre extrémité de la bande. L'élasticité du polyéthylène assure l'élasticité nécessaire de la bande permettant d'assurer un cerclage sous tension, tandis que la rigidité relative du polypropylène permet d'exercer cette tension au moyen de la boucle. Pour cette raison, on n'a considéré jusqu'ici qu'il était absolument nécessaire de réaliser la bande et la boucle en deux pièces distinctes en deux matériaux présentant des caractéristiques différentes.

D'autre part, on désire avoir une position d'ouverture partielle ou de pré-accrochage dans laquelle la boucle est accrochée au crochet, mais non rabattue sur la bande, de manière à faciliter la mise en place de la bague autour de la bobine. Dans cette position de pré-accrochage la biellette reliant la boucle à la bande est retenue en butée contre un bossage de la bande dans une position sensiblement perpendiculaire à la bande. Etant donné qi'il est nécessaire de mouler la bande à plat, cette exigence s'opposait également à la réalisation d'une bande et de sa boucle en une seule pièce.

La biellette présente en outre deux bras munis chacun d'un pivot qu'il est nécessaire d'introduire à force sur un socle de la bande.

La présente invention, faisant fi des préjugés existants, a pour but de réaliser une bande et sa boucle en une seule pièce, c'est-à-dire de supprimer l'opération d'assemblage à force de la boucle à la bande.

La bague de cerclage et de stockage selon l'invention est caractérisée en ce que la bande, la boucle et sa biellette sont en une seule pièce, l'articulation de la biellette sur la bande étant assurée par une zone amincie, et en ce que la bande proprement dite est munie d'au moins un pilier dans la zone d'articulation de la biellette, interceptant la trajectoire de la biellette, la biellette et/ou le pilier présentant un flanc oblique de telle sorte que lorsqu'on fait pivoter la biellette en arrière la première fois, ledit flanc oblique permet à la biellette de dépasser le pilier par déformation élastique, un retour de la biellette en position initiale dans le prolongement de la bande étant ensuite empêché par le même pilier.

La bande et sa boucle ont été réalisées en polypropylène. Par diminution de la section de la bande, il a été possible d'obtenir une élasticité équivalente à celle des bandes connues en polyéthylène en conservant une résistance équivalente, tout en économisant de la matière.

On aurait pu certes augmenter l'élasticité du polypropylène en y ajoutant des élastomères, mais un tel matériau compound aurait été trop couteux.

L'interception de la trajectoire de la biellette par le pilier a permis de résoudre le problème de la position de pré-accrochage en butée. La biellette vient en quelque sorte se clipser derrière le pilier lorsqu'elle est relevée après moulage.

Le dessin annexé représente, à titre d'exemple, une forme d'exécution de l'invention, ainsi qu'une variante de celle-ci.

La figure 1 est une vue en plan de la boucle et de l'extrémité de la bande en position de démoulage.

La figure 2 est une vue en coupe longitudinale selon II-II de la figure 1.

La figure 3 est une vue de profil selon A de la liaison de la biellette à la bande.

La figure 4 est une demi-coupe selon IV-IV de la figure 1.

La figure 5 est une demi-coupe selon V-V de la figure 2.

La figure 6 est une demi-coupe selon VI-VI de la figure 2.

La figure 7 est une vue en coupe selon VII-VII de la figure 1.

La figure 8 représente la boucle relevée en position de pré-accrochage.

La figure 9 représente les deux extrémités de la bague en position fermée.

La figure 10 représente une variante selon une vue correspondant à la figure 1.

La figure 11 est une vue en coupe partielle des deux extrémités de la bande en position fermée selon la variante d'exécution représentée à la figure 10.

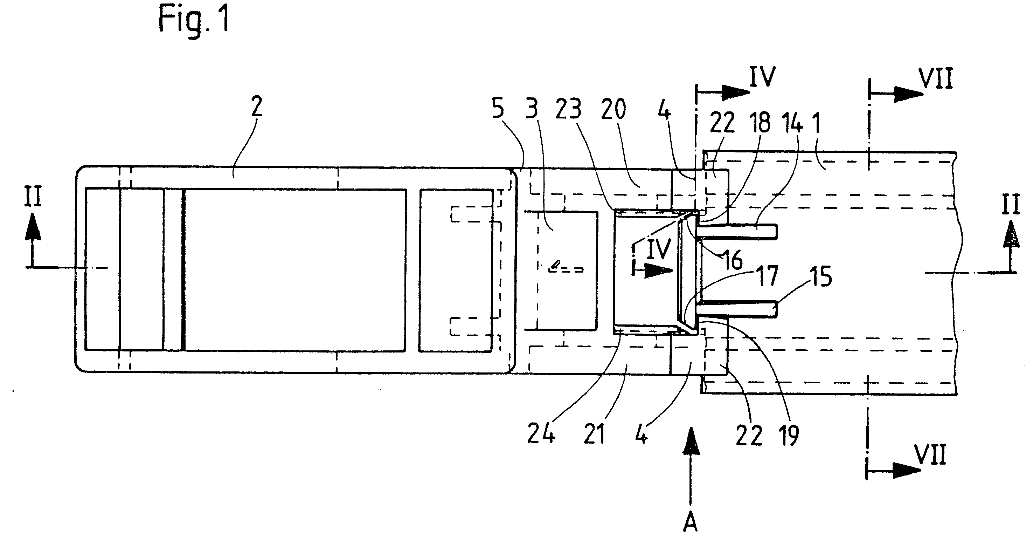

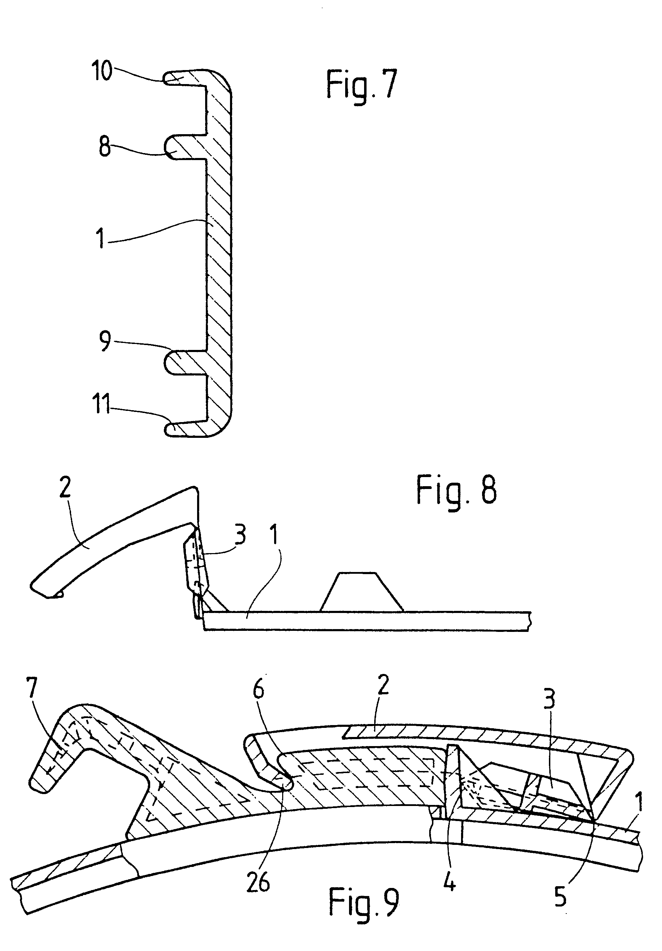

La bague de cerclage partiellement représentée aux figures 1 à 9 est essentiellement constituée d'une bande profilée 1 en polypropylène venue d'une pièce avec une boucle 2 reliée à la bande 1 par une biellette 3. L'articulation de la biellette est assurée à l'une de ses extrémités par des parties amincies 4 et à l'autre extrémité par une partie amincie 5. La boucle 2 vient s'accrocher, de manière connue en soi, à un crochet 6 (fig. 9) fixé sur l'autre extrémité de la bande 1. Le crochet 6 est solidaire d'un second crochet 7 permettant de suspendre la bobine cerclée lors de son rangement.

Aux figures 1, 2 et 3 la bande et sa boucle 2 sont représentées en position de moulage, c'est-à-dire en position a plat, tout au moins en ce qui concerne la biellette 3.

La bande 1 présente sur sa face intérieure deux nervures longitudinales intérieures 8 et 9 destinées à s'engager entre les deux flasques de la bobine et deux nervures extérieures 10 et 11 destinées à s'engager sur la face extérieure des flasques de la bobine (fig. 7). Sur la plus grande partie de la périphérie de la bobine ces nervures 10 et 11 sont beaucoup plus basses que représentées à la figure 7. A l'extrémité de la bande représentée est formé un pilier 12 constitué d'une partie transversale 13 s'étendant sur environ la moitié de la largeur de la bande 1 et solidaire de deux membrures longitudinales 14 et 15 assurant la rigidité du pilier. La partie transversale 13 du pilier présente, en regard de la biellette 3, deux bords verticaux obliques 16 et 17 et, en regard de la bande, deux facettes transversales 18 et 19 de part et d'autre des membrures 14 et 15.

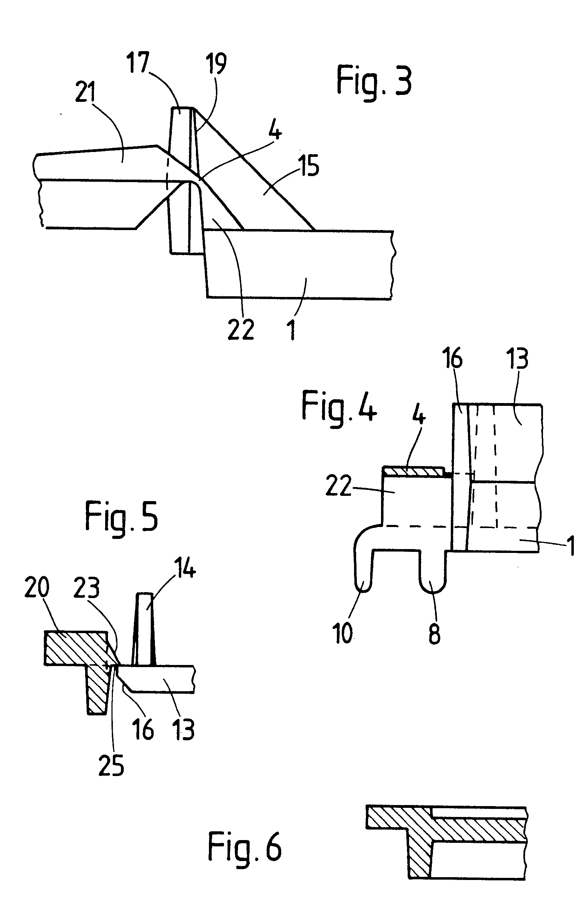

La biellette 3 présente deux bras 20 et 21 reliés à la bande 1 par les deux parties amincies 4 formées à l'extrémité supérieure de deux socles 22 (fig. 3). Ces bras 20 et 21 présentent un profil en L et sur leurs côtés en regard sont prévus des bossages présentant, du côté du pilier 12 une rampe 23, respectivement 24, suivi d'une facette 25 parallèle au plan de la biellette (fig. 5).

La boucle 2 est en forme de capot dont le bord transversal 26 de son extrémité est legèrement coudé vers l'arrière. Cette forme permet à la boucle de s'accrocher sur le crochet 6 en recouvrant celui-ci (fig. 9).

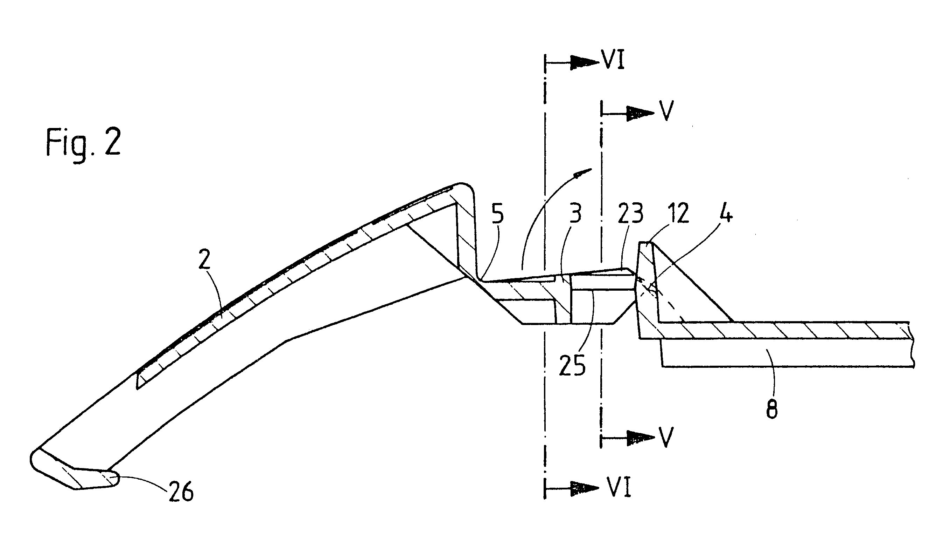

Lors de l'utilisation de la boucle de cerclage on relève la biellette 3 en la faisant pivoter autour de sa charnière 4, comme indiqué à la figure 2. Les rampes 23 et 24 de la biellette 3 viennent buter contre les bords 16 et 17 du pilier 12. En forçant un peu, les bras 20 et 21 s'écartent légèrement élastiquement et les facettes 25 de ces bras passent en arrière du pilier. Un retour à la position initiale n'est plus possible car les facettes 25 viennent buter contre les facettes 18 et 19 du pilier. On obtient ainsi la position de pré-accrochage désirée telle que représentée à la figure 8.

En position de fermeture telle que représentée à la figure 9, la biellette 3 vient s'appliquer sur la bande 1 après avoir fonctionnée en genouillère, c'est-à-dire après avoir dépassée une position de tension maximale dans laquelle les points de pivotement 26, 5 et 4 sont alignés.

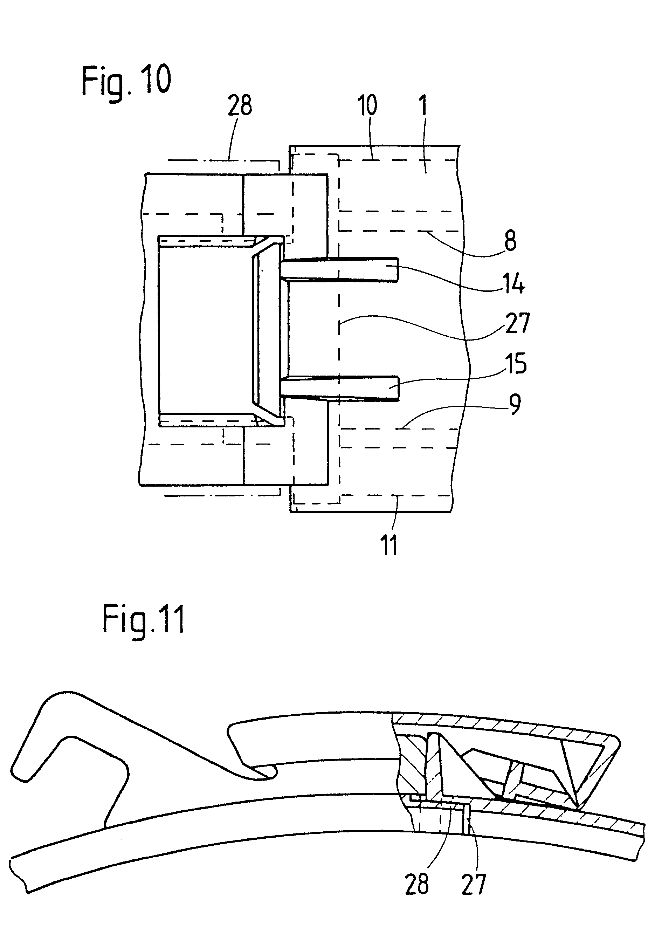

Le diamètre des bobines à cercler peut varier dans certaines limites. Cette variation est multipliée par 3,14 pour la circonférence. A la figure 9, les deux extrémités de la bande 1 ont été représentées en butée l'une contre l'autre, mais, compte tenue des variations mentionnées, il est judicieux de prévoir un certain jeu, de telle sorte qu'une bande soit tendue aussi bien sur une bobine de circonférence minimale que sur une bobine de circonférence maximale. En raison de l'élasticité de la boucle, cela signifie qu'une bague tendue sur une bobine de circonférence maximale présentera un espace entre les extrémités de la bande 1. Or, un tel espace constitue un trou laissant pénétrer la poussière dans la bobine. La variante d'exécution représentée aux figures 10 et 11 a pour but d'obvier à cet inconvénient. Dans cette variante d'exécution, l'extrémité de la bande 1 portant la boucle présente un dégagement rectangulaire 27 interrompant les nervures 8 et 9 et pénétrant dans la moitié de l'épaisseur de la bande 1, sous les membrures 14 et 15. L'autre extrémité de la bande présente une extrémité amincie 28 sur la moitié de son épaisseur, dans l'autre sens et de largeur très légèrement inférieure à la largeur du dégagement 27, de telle sorte que cette partie 28 peut pénétrer dans le dégagement 27 avec un faible jeu. La partie 28 est représentée en trait mixte à la figure 10. Cette pénétration de l'une des extrémités de la bande dans l'autre permet d'avoir une variation de la circonférence de la boucle fermée tendue en conservant le recouvrement des deux extrémités de la bande, c'est-à-dire en évitant la formation d'un trou.

De nombreuses variantes d'exécution sont possibles sans sortir du cadre de l'invention. En particulier, il suffirait de prévoir des faces obliques soit sur les bras 20 et 21 de la biellette 3, soit seulement sur le pilier 12.

Il serait également possible de prévoir une biellette présentant un seul bras central venant écarter deux piliers lors de son relèvement.

**Revendications**

1. Bague de cerclage et de stockage pour bobine de ruban d'enregistrement destinée à être utilisée avec une bobine comprenant un moyen et une paire de flasques parallèles circulaires, comprenant une bande en matière flexible et extensible (1) munie de nervures longitudinales (8, 9, 10, 11) destinées à s'engager de part et d'autre de chacun des flasques de la bobine et munie à l'une de ses extrémités d'un crochet (6) et à son autre extrémité d'une boucle (2) articulée sur cette extrémité et venant s'accrocher sue le crochet pour fermer la bague et la tendre sur la bobine, cette boucle étant articulée sur la bande par une biellette (3) dont la rotation, en position d'ouverture ou de pré-accrochage, est limitée par des moyens de butée, caractérisée en ce que la bande, la boucle et sa biellette sont en une seule pièce, l'articulation de la biellette sur la bande étant assurée par une zone amincie (4), et en ce que la bande proprement dite (1) est munie d'au moins un pilier (12) dans la zone d'articulation de la biellette (3), interceptant la trajectoire de la biellette, la biellette et/ou le pilier présentant un flanc oblique (23, 24, 16, 17) de telle sorte que lorsqu'on fait pivoter la biellette en arrière la première fois, ledit flanc oblique permet à la biellette de dépasser le pilier par déformation élastique, un retour de la biellette en position initiale dans le prolongement de la bande (1) étant ensuite empêché par le même pilier.

2. Bague selon la revendication 1, dans laquelle ladite biellette est articulée par deux bras sur la bande, caractérisée en ce que la bande comporte un pilier central (12) et que les bras (20, 21) de la biellette présentent un profil en L, les faces en regard des deux bras présentant un bossage constitué d'un rampe (23) suivie d'une facette (25) perpendiculaire au plan de la trajectoire des biellettes, par laquelle chacun des bras vient buter contre le pilier (12) en position d'ouverture maximale, après avoir dépassé le pilier une première fois en s'écartant élastiquement l'un de l'autre.

3. Bague selon l'une quelconque des revendications 1 ou 2, caractérisée en ce que l'extrémité de la bande munie de la boucle (2) présente un dégagement (27) s'étendant sur environ la moitié de l'épaisseur de la bande, tandis que l'autre extrémité de la bande présente un amincissement et un rétrécissement (28) correspondant aux dimensions dudit dégagement (27), de telle sorte que ledit rétrécissement pénètre dans ledit dégagement et garantissant un recouvrement des deux extrémités de la bande sur une certaine plage.

4. Bague selon l'une quelconque des revendications 1 à 3, caractérisée en ce que ledit pilier (12) est en outre relié à la bande par deux membrures (14, 15) s'étendant dans le sens de la bande.

5. Bague selon l'une quelconque des revendications 1 à 4, caractérisée en ce que la bande (1), la boucle (2) et sa biellette (3) sont en polypropylène.

**Patentansprüches**

1. Verschluss- und Speicherring für Aufzeichnungsbandspule zur Verwendung bei einer Spule mit einer Nabe und einem Paar parallelen, kreisförmigen Flanschen, bestehend aus einem Streifen aus einem biegsamen und dehnbaren Material (1), welcher mit Längsrippen (8, 9, 10, 11) zur Anlage beiderseits jedes der Spulenflansche versehen ist sowie an einem seiner Enden mit einem Haken (6) und an seinem anderen Ende mit einer hieran angelenkten Schnalle (2), die sich zum Schliessen des Ringes und zu dessen Spannung um die Spule an diesem Haken festhakt, wobei diese Schnalle an dem Streifen mittels eines Verbindungshebels (3) angelenkt ist, dessen Schwenkung in der offenen Stellung vor der Verhakung von Anschlägen begrenzt ist, dadurch gekennzeichnet, dass der Streifen, die Schnalle und ihr Verbindungshebel aus einem einziger Stück bestehen und die Verschwenkbarkeit des Verbindungshebels an dem Streifen durch einen dünner gehaltenen Abschnitt ermöglicht wird und dass der eigentliche Streifen (1) mit wenigstens einem Anschlag (12) in dem Schwenkbereich des Verbindungshebels (3) versehen ist, der die Bahn des Schwenkhebels schneidet, wobei der Verbindungshebel und/oder der Anschlag eine abgeschrägte Seite derart aufweisen, dass, sobald man den Verbindungshebel das erste Mal nach rückwärts schwenken lässt, diese abgeschrägte Seite dem Verbindungshebel durch elastische Verformung ein Vorbeigleiten an dem Anschlag ermöglicht, eine Rückbewegung des Verbindungshebels in seine Ausgangslage in der Verlängerung des Streifens dann aber von demselben Anschlag verhindert wird.

2. Ring nach Anspruch 1, wobei dieser Verbindungshebel durch zwei Arme an dem Streifen angelenkt ist, dadurch gekennzeichnet, dass der Streifen einen mittleren Anschlag (17) aufweist und dass die Arme (20, 21) des Verbindungshebels ein Profil in L-Form haben, wobei die einander gegenüberliegenden Seiten der beiden Arme einen Wulst mit einer Schräge (23), gefolgt von einer Facettenfläche (25) rechtwinklig zur Ebene der Verbindungshebelbahn aufweisen, womit jeder der Arme in weitester Öffnungsstellung an dem Anschlag (12) anschlägt, nachdem sie an dem Anschlag ein erstes Mal unter elastischer Spreizung voneinander vorbeigegangen sind.

3. Ring, nach einem der Ansprüche 1 oder 2, dadurch gekennzeichnet, dass das Streifenende mit der Schnalle (2) eine Ausnehmung (27) aufweist, die sich bis über ungefähr die Hälfte der Dicke des Streifens erstreckt, während das andere Ende des Streifens eine Verdünnung und eine Verengung (28) aufweist, welche den Abmessungen dieser Ausnehmung (27) entsprechen, so dass die Verengung in diese Ausnehmung eindringt und eine Abdeckung der beiden Enden des Bandes über einen gewissen Bereich gewährleistet ist.

4. Ring nach einem der Ansprüche 1 bis 3, dadurch gekennzeichnet, dass der Anschlag (12) weiterhin mit dem Streifen mittels zweier Rippen (14, 15) verbunden ist, die sich in Richtung des Streifens erstrecken.

5. Ring nach einem der Ansprüche 1 bis 4, dadurch gekennzeichnet, dass der Streifen (1), die Schnalle (2) und ihr Verbindungshebel (3) aus Polypropylen bestehen.

**Claims**

1. A ring for sealing and storage of a spool of recording tape and intended for being employed with a spool comprising a hub and a pair of parallel circular cheeks, the said ring comprising a band of flexible and extensible matter (1), equipped with longitudinal ribs (8, 9, 10, 11) intended for engaging on opposite sides of each of the cheeks of the spool and equipped at one end of it with a hook (6) and at the other end of it with a latch (2) hinged onto this end and becoming hooked over the hook in order to close the ring and stretch it round the spool, the said latch being hinged onto the band by a link (3) the rotation of which in the open pre-hooking position is restricted by stop mean, characterized in that the band, the latch and its link are all in one piece, the hingeing of the link onto the band being ensured by a zone of reduced thickness (4), and wherein the band (1) proper is equipped in the hinge zone of the link (3) with at least one column (12) which intercepts the path of the link, the link and/or the column exhibiting an oblique flank (23, 24, 16, 17) when the link is made to pivot back the first time the said oblique flank enables the link to pass beyond the column by elastic deformation, return of the link into its original position in prolongation to the band then being prevented by the same column.

2. A ring according to claim 1, in which the said link is hinged onto the band by two arms, characterized in that the band includes a central column (12) and the arms (20, 21) of the link exhibit an L-shaped profile, the sides of the two arms facing one another exhibiting a swelling consisting of a ramp (23) followed by a small face (25) which is perpendicular to the plane of the path of the links and by which each of the arms comes to a stop against the column (12) in the position of maximum opening after having passed beyond the column the first time by spreading apart elastically.

3. A ring according to one of claims 1 or 2, characterized in that the end of the band equipped with the latch (2) exhibits a clearance (27) which extends across about half the thickness of the band, whilst the other end of the band exhibits a reduced thickness and a contraction (28) corresponding with the dimensions of the said clearance (27) so that the said contraction penetrates into the said clearance to guarantee an overlap of the ends of the band across a certain area.

4. A ring as according to one of claims 1 through 3, characterized in that the said column (12) is in addition connected to the band by two brackets (14, 15) extending in the direction of the band.

5. A ring, according to one of claims 1 through 4, characterized in that the band (1), the latch (2) and its link (3) are of polypropylene.

Fig. 1

Fig. 2

0 164 790

Fig. 3

21  17  19  4  15

22  1

Fig. 4

16  13

4

22

1

Fig. 5

20  23  14

16  13

25

10  8

Fig. 6

Fig. 7

Fig. 8

Fig. 9

## Fig. 10

## Fig.11